# FASCICULE DE BREVET EUROPEEN

(11) **EP 2 946 228 B1**
(45) Date de publication et mention de la délivrance du brevet: **27.12.2017**
(21) Numéro de dépôt: 14702758.5
(22) Date de dépôt: 14.01.2014
(51) Int. Cl.: G01S 17/89, G01S 17/93, G01S 17/46, G05D 1/02, A47L 9/00, G01S 7/497

(54) **PROCEDE ET SYSTEME POUR FOURNIR A UN DISPOSITIF MOBILE DES INFORMATIONS SUR SA POSITION PAR RAPPORT A UNE CIBLE, ROBOT INTEGRANT UN TEL SYSTEME ET TABLETTE**
VERFAHREN UND SYSTEM ZUR BEREITSTELLUNG EINER MOBILEN VORRICHTUNG MIT INFORMATIONEN ZUR DAVON BEZÜGLICH EINES ZIELOBJEKTS, ROBOTER MIT SOLCH EINEM SYSTEM UND TABLET-COMPUTER
METHOD AND SYSTEM FOR PROVIDING A MOBILE DEVICE WITH INFORMATION ON THE POSITION THEREOF RELATIVE TO A TARGET, ROBOT INTEGRATING SUCH A SYSTEM AND TABLET

(30) Priorité: 18.01.2013 FR 1350460
(43) Date de publication de la demande: 25.11.2015
(73) Titulaire: Archos, 91430 Igny (FR)
(72) Inventeur: MALLART, Raul, F-75012 Paris (FR)
(74) Mandataire: Pontet Allano & Associes
(86) Numéro de dépôt international: PCT/EP2014/050530
(87) Numéro de publication internationale: WO 2014/111357

(56) Documents cités:
- EP-A2- 1 202 074
- EP-A2- 1 202 075
- CN-U- 202 561 397
- US-A1- 2007 100 501
- US-A1- 2009 125 175
- US-B2- 6 496 754

## Description

### Domaine technique

La présente invention concerne un procédé et système pour fournir à un dispositif mobile des informations sur sa position par rapport à une cible.

Elle concerne également un robot intégrant un tel système. Elle concerne aussi une tablette communiquant avec un tel robot et mettant en oeuvre un tel procédé.

Le domaine de l'invention est, de manière non limitative, celui des robots domestiques et plus particulièrement celui du guidage de robots domestiques.

### Etat de la technique antérieur

On connaît des systèmes de détection de distance entre un robot et un obstacle, par exemple ceux décrits dans les documents US 2009/125175 et US 2007/100501, ou par exemple celui employé dans le système Sharp (cf. : http://www.acroname.com/robotics/info/articles/sharp/sharp.html#e2).

Ce système comporte une source lumineuse et un capteur linéaire. Lorsque la lumière est réfléchie par l'obstacle, cette réflexion est détectée par le capteur. La position de la réflexion sur le capteur définit un angle qui permet de déduire la distance du robot à l'obstacle.

Des améliorations de ce système existent et utilisent un laser comme source de lumière. Le capteur est linéaire. L'éclairement laser permet de projeter un point lumineux sur l'obstacle. En faisant une image du champ visuel capté par le capteur linéaire, on peut déterminer la distance de ce point lumineux par trigonométrie.

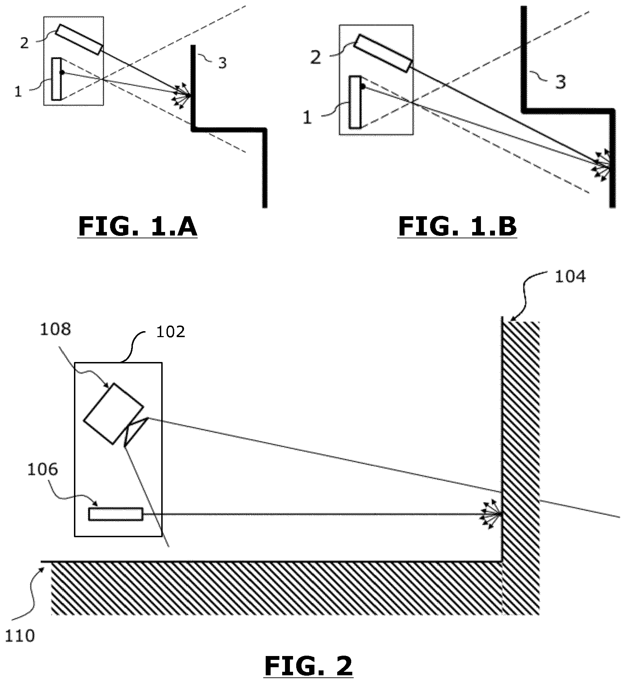

En référence à la figure 1, on observe que la position de l'image du point laser sur l'obstacle - captée par le capteur linéaire d'image - dépend de la distance de l'obstacle et permet de déterminer cette distance.

Ce système ne permet de donner que la distance d'un point. Pour obtenir une carte de distance, il faut donc balayer le système.

Ce balayage est typiquement circulaire comme par exemple dans le robot NEATO qui est un aspirateur domestique. Dans le système NEATO, le laser et le capteur d'image sont placés l'un à côté de l'autre sur un support rotatif muni de contact glissant. Ceci dans le but d'assurer l'alimentation électrique et la récupération des données du système en rotation.

En supposant une résolution angulaire de 1° et une vitesse de capture de 360 images par seconde, ce système permet de capturer une carte de distance sur 360° en 1 seconde.

Le prix de revient d'un tel système est de l'ordre de $20.

Un objectif de l'invention est de proposer un procédé, système, robot et tablette qui soient moins chers à fabriquer que les systèmes de guidage pour robot actuels. Un prix de l'ordre de $3 est envisagé.

Un autre objectif de l'invention est donc de proposer un procédé, système, robot et tablette qui augmentent la cadence des mesures.

Un autre but de l'invention est de proposer un procédé, système, robot et tablette qui suppriment les pièces en mouvement. Un tel objectif augmente la fiabilité du système. Un tel objectif diminue son prix. Un tel objectif réduit sa complexité.

### Exposé de l'invention

On atteint au moins un de ces objectifs avec un procédé pour fournir à un dispositif mobile des informations sur sa position par rapport à une cible, comprenant :
- une émission, à partir d'une source laser liée audit dispositif mobile, d'un faisceau laser divergeant sensiblement dans un plan d'émission orienté de sorte que ledit faisceau émis illumine au moins partiellement ladite cible,
- une capture d'image, à partir d'un équipement d'imagerie lié audit dispositif mobile, de ladite scène partiellement illuminée, pour capturer une image,
- un traitement de l'image ainsi capturée de façon à produire des informations de position dudit dispositif mobile par rapport à ladite cible.

L'équipement d'imagerie peut par exemple être situé sensiblement au-dessus du plan d'émission.

De plus, le procédé selon l'invention peut mettre en oeuvre une capture pixellisée et le traitement de l'image capturée peut comprendre une détection bidimensionnelle des pixels correspondant à des zones de la scène illuminée.

De plus, les informations de position peuvent comprendre une carte de distance.

De plus, la carte de distance peut présenter une largeur angulaire sensiblement égale à l'angle de divergence du faisceau laser émis.

De plus, le traitement de l'image capturée peut comprendre une détection des pixels correspondant aux zones de la scène illuminée, de sorte que la carte de distance est obtenue en une seule prise de vue.

De plus, le traitement de l'image capturée peut comprendre pour chaque pixel correspondant aux zones de la scène illuminée, une détermination de la position horizontale de façon à fournir une information de position angulaire du dispositif mobile et une détection de la position verticale du pixel de façon à fournir une information de distance du dispositif mobile.

De plus, le procédé selon l'invention peut en outre comprendre une capture préalable à l'émission, au cours de laquelle une capture d'image est réalisée alors que le faisceau laser n'émet pas.

La capture est réalisée selon un axe optique de l'équipement d'imagerie formant un angle (α) variable avec le plan d'émission du faisceau laser.

Le procédé selon l'invention comprend en outre une étape de calibration, dite angulaire, réalisée par un traitement supplémentaire de positions pour déterminer une information de position, dite de référence, résultant d'une capture d'image d'un élément, dit de référence.

De plus, la calibration angulaire peut être réalisée plusieurs fois.

De plus, le procédé selon l'invention peut en outre comprendre une étape de calibration spatiale, et la calibration spatiale peut être réalisée plusieurs fois.

Selon un autre aspect de l'invention, il est proposé un système pour fournir à un dispositif mobile des informations sur sa position par rapport à une cible, mettant en oeuvre le procédé selon l'une quelconque des revendications précédentes, comprenant :
- une source laser liée audit dispositif mobile, prévue pour émettre un faisceau laser divergeant sensiblement dans un plan d'émission orienté de sorte que ledit faisceau émis illumine au moins partiellement ladite cible,
- un équipement d'imagerie lié audit dispositif mobile, prévu pour capturer une image de ladite cible,
- des moyens pour traiter l'image ainsi capturée de façon à produire des informations de position dudit dispositif mobile par rapport à ladite cible.

L'équipement d'imagerie peut être situé sensiblement au-dessus du plan d'émission.

De plus, l'équipement d'imagerie peut comprendre une caméra CCD.

De plus, l'équipement d'imagerie peut être configuré pour réaliser une capture d'image alors que le faisceau laser n'émet pas. Ainsi, les moyens de traitement de l'image peuvent être configurés pour détecter les positions sur le détecteur lorsque le faisceau laser émet.

L'équipement d'imagerie est configuré pour que le faisceau laser en nappe plane forme un angle (α) variable avec l'axe optique de l'équipement d'imagerie.

Le système selon l'invention comprend en outre des moyens de calibration, dits angulaires, comprenant des moyens de traitement supplémentaire des positions sur le détecteur, configurés pour utiliser une position de référence résultant d'une capture d'image d'un module d'émission de référence.

De plus, le système selon l'invention peut en outre comprendre des moyens de répétition configurés pour mettre en oeuvre plusieurs fois les moyens de calibration angulaire.

De plus, le système selon l'invention peut en outre comprendre des moyens de répétition configurés pour mettre en oeuvre plusieurs fois les moyens de calibration spatiale.

Selon un autre aspect de l'invention, il est proposé un robot mobile intégrant un système de mesure de position selon l'invention.

Le robot selon l'invention peut être agencé pour recevoir et communiquer avec une tablette numérique comprenant les moyens de traitement d'image agencés pour déterminer une distance entre le laser et un point d'impact du faisceau laser sur l'obstacle, en fonction d'une position du faisceau réfléchi sur le détecteur.

Selon un autre aspect de l'invention, il est proposé une tablette numérique comprenant des moyens de détection d'un faisceau lumineux et des moyens de communication, caractérisée en ce que les moyens de communication sont configurés pour communiquer avec un robot et ce qu'elle est configurée pour guider le robot selon un procédé selon l'invention.

### Description des figures et modes de réalisations

D'autres avantages et particularités de l'invention apparaîtront à la lecture de la description détaillée de mises en oeuvre et de modes de réalisation nullement limitatifs, et des dessins annexés suivants :
- les figures 1A et 1B illustrent le principe de fonctionnement d'un système selon l'art antérieur,
- la figure 2 illustre le principe de fonctionnement d'un procédé selon l'invention,
- les figures 3A, 3B et 3C illustrent un principe d'obtention d'une carte de distance en une seule prise de vue,
- la figure 4 illustre un principe de calibration d'un procédé selon l'invention, et
- la figure 5 illustre un système 500 selon l'invention selon un mode de réalisation préféré.

En référence aux figures 1.A et 1.B, on va maintenant décrire le principe de fonction d'un système selon l'art antérieur. Ces deux figures comprennent un même émetteur laser 1 et capteur d'image linéaire 2 disposés dans un plan horizontal. Les deux figures 1.A et 1.B diffèrent par la position d'un obstacle 3 représenté par un mur perpendiculaire au plan horizontal.

Les figures 1.A et 1.B illustrent la différence de position d'un pixel sur le capteur d'image linéaire 2 correspondant à une zone illuminée de l'obstacle 3 par l'émetteur laser 1.

Ce système ne permet que de donner la distance d'un point. Pour obtenir une carte de distance, il faut donc faire effectuer un balayage de la cible par le système. Ce balayage est typiquement circulaire comme par exemple dans le robot NEATO.

En référence à la figure 2, on va maintenant décrire le principe de fonctionnement d'un procédé selon un mode préféré de l'invention. Le procédé fournit à un dispositif mobile 102 des informations sur sa position par rapport à une cible 104.

Un laser ligne 106 et un capteur CCD 108 sont également représentés sur la figure 2.

Au cours d'une étape, dite d'émission, à partir du laser ligne 106 lié au dispositif mobile 102, un faisceau laser illumine au moins partiellement la cible 104. Le faisceau diverge sensiblement dans un plan d'émission orienté de sorte que le faisceau émis illumine au moins partiellement la cible 104. Le plan d'émission est perpendiculaire au plan de la figure 2 et parallèle au sol représenté par l'élément 110.

Au cours d'une étape, dite de capture d'image, le capteur CCD 108 lié au dispositif mobile 102 capture une image de ladite scène partiellement illuminée. La capture est pixellisée.

Au cours d'une étape de traitement de l'image, l'image ainsi capturée est traitée de façon à produire des informations de position du dispositif mobile par rapport à ladite cible. Le traitement de l'image capturée comprend une détection bidimensionnelle des pixels correspondant aux zones de la scène illuminée. Les informations de position comprennent une carte de distance. La carte de distance présente une largeur angulaire sensiblement égale à l'angle de divergence du faisceau laser émis.

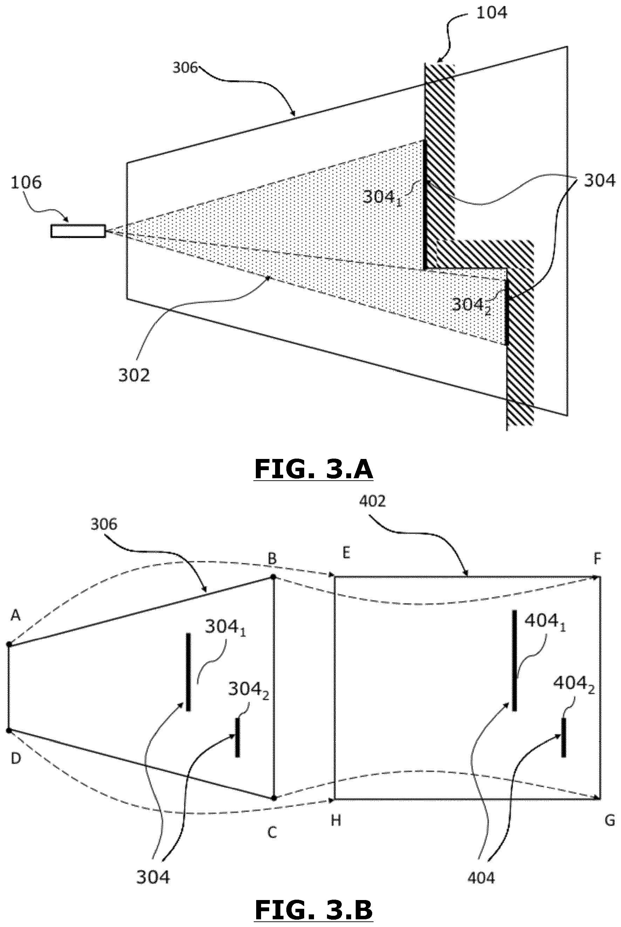

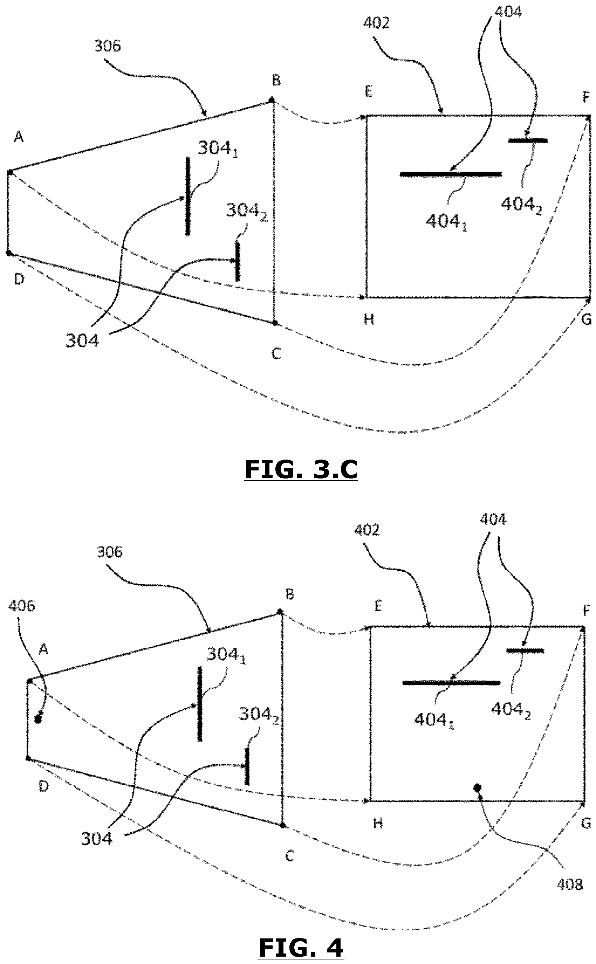

En référence aux figures 3A, 3B et 3C, on va maintenant expliquer comment la détection des pixels correspondant aux zones de la scène illuminée permet d'obtenir une carte de distance en une seule prise de vue.

La figure 3.A est une vue de dessus des éléments représentés sur la figure 2. Ainsi, il est représenté sur la figure 3A un laser ligne 106 sur la gauche de la figure illuminant un mur 104 situé sur la droite de la figure.

L'illumination se fait au moyen d'un pinceau lumineux 302. Le cadre 306 indique le champ de vue du capteur CCD 108 (non représenté) intercepté par le plan du faisceau lumineux émis par le laser ligne 106. Les traits 304₁ et 304₂ dans le champ de vue 306 représentent les traits lumineux dus à l'illumination du mur 104 par le laser ligne 106.

Le mur 304 présente deux parties. Une première partie, dite supérieure est plus proche du laser ligne 106 que de la partie, dite inférieure. Par ailleurs la partie supérieure correspond à une partie sur la gauche et au centre du faisceau lumineux tandis que la partie inférieure correspond à une partie sur la droite du faisceau lumineux.

La figure 3B illustre un lien géométrique existant entre le champ de vue 306 du capteur CCD 108 intercepté par le plan du faisceau lumineux et l'image capturée 402 par le capteur CCD 108.

Le champ de vue 306 de la caméra est délimité par les sommets A, B, C, et D d'un trapèze. Les traits 304₁ et 304₂ tels que définis précédemment sont également représentés à l'intérieur du champ de vue 306 de la caméra.

L'image capturée 402 par le capteur CCD 108 est symbolisée par un carré de sommets E, F, G et H.

Les flèches associant respectivement les sommets A et E, B et F, C et G, D et H illustrent la correspondance existant entre une zone illuminée du champ de vue 306 et un pixel de l'image capturée 402 par le capteur CCD 108.

Des pixels 404 correspondants aux zones illuminées 304 sont dessinés dans l'image capturée 402. Les traits 304₁ et 304₂ sont ainsi associés à des rangées de pixels 404₁ et 404₂. On peut remarquer que plus un obstacle est loin du capteur CCD 108, plus il est à droite de l'image capturée 402 par le capteur CCD 108. De même, plus un obstacle est à la gauche du capteur CCD 108, plus il est en haut de l'image capturée 402.

Ainsi, une détermination de la position horizontale fournit une information sur la distance du capteur CCD à l'obstacle. Une détermination de la position verticale sur l'image capturée 402 fournit une information de la position angulaire du dispositif mobile par rapport à l'obstacle.

La figure 3C illustre une autre association possible entre le champ de vue 306 du capteur CCD 108 intercepté par le plan du faisceau lumineux et l'image capturée 402 par le capteur CCD 108.

La figure 3C est identique à la figure 3B à l'exception des associations réalisées entre les sommets A, B, C, et D d'un trapèze délimitant le champ de vue 306 de la caméra et les sommets E, F, G et H symbolisant l'image capturée 402.

Les traits 304₁ et 304₂ tels que définis précédemment sont également représentés à l'intérieur du champ de vue 306 de la caméra.

Les flèches associant respectivement les sommets A et H, B et E, C et F, D et G illustrent la nouvelle correspondance existant entre une zone illuminée du champ de vue 306 et un pixel de l'image capturée 402 par le capteur CCD 108.

Cette correspondance permet une détermination de la position horizontale d'un pixel de façon à fournir une information de position angulaire du dispositif mobile. Elle permet également une détection de la position verticale du pixel de façon à fournir une information de distance du capteur CCD à l'obstacle.

La figure 4 illustre une étape de calibration, dite angulaire, réalisée par un traitement supplémentaire de positions sur l'équipement d'imagerie pour déterminer une information de position, dite de référence, résultant d'une capture d'image d'un élément, dit de référence. La figure 4 contient les mêmes éléments que la figure 3C. Il est en outre représenté sur la figure 4 une diode électroluminescente (DEL) 406 placée à une distance connue du capteur CCD 108 et visible dans le champ de vue 306 du capteur CCD 108. Cette diode électroluminescente correspond à des pixels 408 du capteur 108 dans l'image capturée par le capteur CCD 108. Ainsi qu'il a été exposé, la position verticale de ces pixels 408 fournit une information de distance du capteur CCD à la diode électroluminescente 406.

La position verticale de ces pixels 408 est associée à la distance connue de la diode 406 au capteur CCD 108. La diode électroluminescente 406 est ainsi un élément de référence dont une capture d'image permet une calibration du procédé selon l'invention.

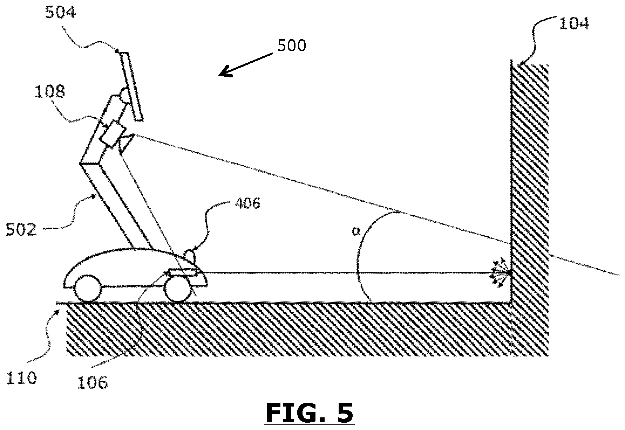

La figure 5 illustre un système 500 pour fournir à un robot 502 des informations sur sa position par rapport à une cible 104, mettant en oeuvre un procédé tel qu'il vient d'être décrit.

Le système 500 comprend :
- laser ligne 106 lié au robot 502. Le laser ligne 106 émet un faisceau laser divergeant sensiblement dans un plan d'émission orienté de sorte que ledit faisceau émis illumine au moins partiellement la cible 104,
- un capteur CCD 108 lié au robot 502, prévu pour capturer une image de la cible 104,
- une tablette 504 pour traiter l'image ainsi capturée de façon à produire des informations de position du robot 502 par rapport à la cible 104.

Le capteur CCD 108 est configuré pour réaliser une capture d'image alors que le faisceau laser n'émet pas.

L'angle formé entre l'axe optique du capteur CCD 108 et le plan du faisceau émis par le laser lime 106 est noté α. L'angle α peut varier lorsque le robot 502 se déplace. En effet, le capteur CCD 108 est fixé sur un bras articulé du robot en rotation par rapport au laser ligne 106.

Le robot 502 reçoit et communique avec la tablette numérique 504.

La tablette numérique avec le robot 502 et est configurée pour guider le robot 502 selon un procédé selon l'invention.

Bien sûr, l'invention n'est pas limitée aux exemples qui viennent d'être décrits et de nombreux aménagements peuvent être apportés à ces exemples sans sortir du cadre de l'invention.

## Revendications

1. Procédé pour fournir à un dispositif mobile (102) des informations sur sa position par rapport à une cible (104), comprenant :
- une émission, à partir d'une source laser (106) liée audit dispositif mobile (102), d'un faisceau laser divergeant sensiblement dans un plan d'émission orienté de sorte que ledit faisceau émis illumine au moins partiellement ladite cible (104),
- une capture d'image, à partir d'un équipement d'imagerie (108) lié audit dispositif mobile (102), de ladite scène partiellement illuminée, pour capturer une image,
- un traitement de l'image ainsi capturée de façon à produire des informations de position dudit dispositif mobile par rapport à ladite cible
dans lequel la capture est réalisée selon un axe optique de l'équipement d'imagerie formant un angle variable (α) avec le plan d'émission du faisceau laser,
**caractérisé en ce que** ledit procédé comprend en outre :
- une étape de calibration, dite angulaire, réalisée par un traitement supplémentaire de positions sur l'équipement d'imagerie pour déterminer une information de position, dite de référence, résultant d'une capture d'image d'un élément (406), dit de référence, placé à une distance connue de l'équipement d'imagerie et visible dans le champ de vue de l'équipement d'imagerie.

2. Procédé selon la revendication 1, mettant en oeuvre une capture pixellisée, dans lequel le traitement de l'image capturée comprend une détection bidimensionnelle des pixels correspondant à des zones de la scène illuminée.

3. Procédé selon la revendication 2, dans lequel les informations de position comprennent une carte de distance.

4. Procédé selon la revendication 3, dans lequel la carte de distance présente une largeur angulaire sensiblement égale à l'angle de divergence du faisceau laser émis.

5. Procédé selon l'une des revendications 3 ou 4, dans lequel le traitement de l'image capturée comprend une détection des pixels correspondant aux zones de la scène illuminée, de sorte que la carte de distance est obtenue en une seule prise de vue.

6. Procédé selon la revendication 5, dans lequel le traitement de l'image capturée comprend pour chaque pixel correspondant à une zone de la scène illuminée, une détermination de la position horizontale de façon à fournir une information de position angulaire du dispositif mobile et une détection de la position verticale dudit pixel de façon à fournir une information de distance dudit dispositif mobile.

7. Procédé selon l'une des revendications précédentes, comprenant en outre une étape de capture préalable à l'émission au cours de laquelle une capture d'image est réalisée alors que le faisceau laser n'émet pas.

8. Système pour fournir à un dispositif mobile (102 ; 502) des informations sur sa position par rapport à une cible (104), mettant en oeuvre le procédé selon l'une quelconque des revendications précédentes, comprenant :
- une source laser (106) liée audit dispositif mobile, prévue pour émettre un faisceau laser divergeant sensiblement dans un plan d'émission orienté de sorte que ledit faisceau émis illumine au moins partiellement ladite cible,
- un équipement d'imagerie (108) lié audit dispositif mobile, prévu pour capturer une image de ladite cible,
- des moyens (504) pour traiter l'image ainsi capturée de façon à produire des informations de position dudit dispositif mobile par rapport à ladite cible,
système dans lequel dans l'équipement d'imagerie est configuré pour que le faisceau laser en nappe plane forme un angle (α) variable avec l'axe optique de l'équipement d'imagerie,
**caractérisé en ce que** le système comprend en outre des moyens de calibration, dits angulaires, comprenant des moyens de traitement de positions sur le détecteur configurés pour utiliser une position de référence, placée à une distance connue de l'équipement d'imagerie et visible dans le champ de vue de l'équipement d'imagerie, résultant d'une capture d'image d'un module d'émission de référence (406).

9. Système selon la revendication 8, dans lequel l'équipement d'imagerie comprend une caméra CCD.

10. Système selon la revendication précédente, dans lequel l'équipement d'imagerie est configuré pour réaliser une capture d'image alors que le faisceau laser n'émet pas.

11. Robot mobile (502) intégrant un système de mesure de position selon l'une des revendications 8 à 10.

12. Robot selon la revendication 11, agencé pour recevoir et communiquer avec une tablette numérique (504) comprenant les moyens de traitement d'image agencé pour déterminer une distance entre le laser et un point d'impact du faisceau laser sur l'obstacle, en fonction d'une position sur le détecteur.

13. Tablette numérique (504) comprenant des moyens de détection d'un faisceau lumineux et des moyens de communication, les moyens de communication étant configurés pour communiquer avec un robot (502), ladite tablette numérique étant configurée pour guider le robot en mettant en oeuvre le procédé selon l'une des revendications 1 à 7.

## Patentansprüche

1. Verfahren zum Bereitstellen von Informationen an eine bewegliche Vorrichtung (102) bezüglich ihrer Position relativ zu einem Zielobjekt (104), umfassend:
- ein Emittieren eines divergierenden Laserstrahls ausgehend von einer mit der beweglichen Vorrichtung (102) verbundenen Laserquelle (106) im Wesentlichen in eine Emissionsebene die so ausgerichtet ist, dass der emittierte Strahl zumindest teilweise das Zielobjekt (104) beleuchtet,
- eine Bilderfassung der teilweise beleuchteten Szene mittels einer Abbildungseinrichtung (108), die mit der beweglichen Vorrichtung (102) verbunden ist, um ein Bild zu erfassen,
- ein Verarbeiten des so erfassten Bildes, so dass Information der Position der beweglichen Vorrichtung bezüglich des Zielobjekts erzeugt werden,
wobei die Bilderfassung entlang einer optischen Achse der Abbildungseinrichtung erfolgt, die einen veränderlichen Winkel (α) mit der Emissionsebene des Laserstrahls einschließt,
**dadurch gekennzeichnet, dass** das Verfahren ferner umfasst:
- einen Schritt des Kalibrierens, Winkelkalibrieren genannt, der durch eine zusätzliche Verarbeitung der Positionen in der Abbildungseinrichtung erfolgt, um eine Positionsinformation, Referenzpositionsinformation genannt, zu ermitteln, die sich aus einer Bilderfassung eines Elements (406), Referenzelement genannt, ergibt, das in einer bekannten Entfernung von der Abbildungseinrichtung angeordnet und im Sichtfeld der Abbildungseinrichtung sichtbar ist.

2. Verfahren nach Anspruch 1, wobei eine Pixelerfassung erfolgt, bei der die Verarbeitung des erfassten Bildes eine zweidimensionale Detektion der Pixel umfasst, die Bereichen der beleuchteten Szene entsprechen.

3. Verfahren nach Anspruch 2, wobei die Positionsinformationen eine Entfernungskarte umfassen.

4. Verfahren nach Anspruch 3, wobei die Entfernungskarte einen Winkelbereich aufweist, der im Wesentlichen gleich dem Divergenzwinkel des emittierten Laserstrahls ist.

5. Verfahren nach einem der Ansprüche 3 oder 4, wobei die Verarbeitung des erfassten Bildes eine Detektion der Pixel umfasst, die den Bereichen der beleuchteten Szene entsprechen, so dass die Entfernungskarte mit einer einzigen Aufnahme erhalten wird.

6. Verfahren nach Anspruch 5, wobei die Verarbeitung des erfassten Bildes für jeden Pixel, der einem Bereich der beleuchteten Szene entspricht, eine Ermittlung der horizontalen Position umfasst, so dass eine Winkelpositionsinformation der beweglichen Vorrichtung und eine Detektion der vertikalen Position des Pixels bereitgestellt werden, derart, dass eine Entfernungsinformation der beweglichen Vorrichtung bereitgestellt wird.

7. Verfahren nach einem der vorangehenden Ansprüche, ferner umfassend einen Schritt des Erfassens, der vor Emission erfolgt, bei dem eine Bilderfassung erfolgt, während der Laserstrahl nicht emittiert wird.

8. System zum Bereitstellen von Informationen an eine bewegliche Vorrichtung (102; 502) bezüglich ihrer Position relativ zu einem Zielobjekt (104), bei dem das Verfahren nach einem der vorangehenden Ansprüche durchgeführt wird, mit:
- einer Laserquelle (106), die mit der beweglichen Vorrichtung verbunden ist und ausgebildet ist um einen divergierenden Laserstrahl im Wesentlichen in eine Emissionsebene zu emittieren, die so ausgerichtet ist, dass der emittierte Strahl zumindest teilweise das Zielobjekt beleuchtet,
- eine Abbildungseinrichtung (108), die mit der beweglichen Vorrichtung verbunden und dazu ausgebildet ist, um ein Bild des Zielobjekts zu erfassen,
- Mittel (504) zum Verarbeiten des so erfassten Bildes, so dass Informationen der Position der beweglichen Vorrichtung bezüglich des Zielobjekts erzeugt werden,
bei welchem System die Abbildungseinrichtung so ausgebildet ist, dass der Laserstrahl in ebener Fläche einen veränderlichen Winkel (α) mit der optischen Achse der Abbildungseinrichtung einschließt,
**dadurch gekennzeichnet, dass** das System ferner Kalibriereinrichtungen, Winkelkalibriereinrichtungen genannt, enthält, welche Positionsverarbeitungseinrichtungen am Sensor enthalten, die dazu ausgelegt sind, eine Referenzposition zu verwenden, die in einer bekannten Entfernung von der Abbildungseinrichtung liegt und im Sichtfeld der Abbildungseinrichtung sichtbar ist und sich aus einer Bilderfassung eines Referenzemissionsmoduls (406) ergibt.

9. System nach Anspruch 8, wobei die Abbildungseinrichtung eine CCD-Kamera enthält.

10. System nach dem vorangehenden Anspruch, wobei die Abbildungseinrichtung dazu ausgebildet ist, eine Bilderfassung durchzuführen, während der Laserstrahl nicht emittiert wird.

11. Beweglicher Roboter (502), der ein Positionsmesssystem nach einem der Ansprüche 8 bis 10 enthält.

12. Roboter nach Anspruch 11, der dazu vorgebildet ist, einen Tablet-Computer (504) aufzunehmen und mit diesem zu kommunizieren, der die Bildverarbeitungseinrichtungen enthält und dazu ausgebildet ist, eine Entfernung zwischen dem Laser und einem Auftreffpunkt des Laserstrahls auf das Hinderns in Abhängigkeit von einer Position am Sensor zu ermitteln.

13. Tablet-Computer (504), mit Einrichtungen zur Detektion eines Laserstrahls und mit Kommunikationseinrichtungen, wobei die Kommunikationseinrichtungen dazu ausgebildet sind, mit einem Roboter (502) zu kommunizieren, wobei der Tablet-Computer dazu ausgebildet ist, den Roboter zu führen, dass er das Verfahren nach einem der Ansprüche 1 bis 7 durchführt.

## Claims

1. Method for providing a mobile device (102) with information on the position thereof relative to a target (104), comprising:
- emitting, from a laser source (106) linked to said mobile device (102), a laser beam diverging substantially in a plane of emission oriented so that said emitted beam at least partially illuminates said target (104),
- capturing an image, from imaging equipment (108) linked to said mobile device (102), of said partially illuminated scene, in order to capture an image,
- processing the image thus captured so as to produce information on the position of said mobile device relative to said target,
wherein the capture is carried out according to an optical axis of the imaging equipment forming a variable angle (α) with the plane of emission of the laser beam,
**characterized in that** said method further comprises:
- a step of calibration, called angular calibration, carried out by a supplementary processing of positions on the imaging equipment in order to determine an item of position information, called reference position information, resulting from a image capture of an element (406), called reference element, placed at a known distance from the imaging equipment and visible in the field of view the imaging equipment.

2. Method according to claim 1, implementing a pixelated capture, wherein the processing of the captured image comprises a two-dimensional detection of the pixels corresponding to areas of the illuminated scene.

3. Method according to claim 2, wherein the position information comprises a distance map.

4. Method according to claim 3, wherein the distance map has an angular width substantially equal to the divergence angle of the emitted laser beam.

5. Method according to one of claims 3 or 4, wherein the processing of the captured image comprises a detection of the pixels corresponding to the areas of the illuminated scene, so that the distance map is obtained in a single shot.

6. Method according to claim 5, wherein the processing of the captured image comprises for each pixel corresponding to an area of the illuminated scene, a determination of the horizontal position so as to provide an item of information on the angular position of the mobile device and a detection of the vertical position of said pixel so as to provide an item of distance information of said mobile device.

7. Method according to one of the preceding claims, also comprising a step of capture prior to the emission, during which an image capture is carried out while the laser beam is not emitted.

8. System for providing a mobile device (102 ; 502) with information on the position thereof relative to a target (104), implementing the method according to any one of the preceding claims, comprising:
- a laser source (106) linked to said mobile device, provided in order to emit a laser beam diverging substantially in a plane of emission oriented so that said emitted beam at least partially illuminates said target,
- imaging equipment (108) linked to said mobile device, provided in order to capture an image of said target,
- means (504) for processing the image thus captured so as to produce information on the position of said mobile device relative to said target,
**characterized in that** the system comprises the imaging equipment is configured so that the laser beam on a flat surface forms an angle (α) with the optical axis of the imaging equipment,
system also comprising calibration means, called angular calibration means, comprising means for processing positions on the detector configured to utilize a reference position, placed at a known distance from the imaging equipment and visible in the field of view the imaging equipment, resulting from a image capture of a reference emission module (406).

9. System according to claim 8, wherein the imaging equipment comprises a CCD camera.

10. System according to the preceding claim, wherein the imaging equipment is configured to carry out an image capture when the laser beam is not emitted.

11. Mobile robot (502) integrating a position measurement system according to one of claims 8 to 10.

12. Robot according to claim 11, arranged in order to receive and communicate with a digital tablet (504) comprising image processing means arranged in order to determine a distance between the laser and a point of impact of the laser beam on the obstacle, as a function of a position on the detector.

13. Digital tablet (504) comprising means for detecting a light beam and communication means, the communication means being configured to communicate with a robot (502), said digital tablet being configured to guide the robot by implementing the method according to one of claims 1 to 7.
